# EUROPEAN PATENT SPECIFICATION

(11) **EP 1 044 801 B1**
(45) Date of publication and mention of the grant of the patent: **22.07.2009**
(21) Application number: 00302929.5
(22) Date of filing: 06.04.2000
(51) Int. Cl.: B32B 17/10, C03C 27/12

(54) **Fire protection glass**
Feuerschutzglasscheibe
Verre pour la protection contre le feu

(30) Priority: 13.04.1999 DE 19916506
(43) Date of publication of application: 18.10.2000
(73) Proprietor: Pilkington Deutschland AG, 45884 Gelsenkirchen (DE)
(72) Inventor: Zernial, Wolfgang, 45884 Gelsenkirchen (DE); Harbecke, Bernd, 44879 Bochum (DE); Keller, Manfred, 46119 Oberhausen (DE); Ollech, Heinz Jurgen, 45699 Herten (DE)
(74) Representative: Hamilton, Raymond

(56) References cited:
- EP-A- 0 524 418
- EP-A- 0 705 685
- GB-A- 2 023 452
- LU-A- 60 053
- PATENT ABSTRACTS OF JAPAN vol. 018, no. 288 (C-1207), 2 June 1994 (1994-06-02) & JP 06 056486 A (NIPPON ELECTRIC GLASS CO LTD), 1 March 1994 (1994-03-01) & JP 00 656486 A (NIPPON ELECTRIC GLASS CO LTD)

## Description

The present invention relates to a fire protection glass comprising at least three glass panes and at least two fire-retardant intermediate layers of aqueous alkali silicate each provided between the glass panes.

Fire protection glasses are classified by different ratings as a function of their fire behaviour and their endurance. Fire protection glasses having a fire resistance rating G including frames and supporting structures have to reliably prevent the propagation of flames and smoke for a certain period of time when subjected to the fire behaviour test according to DIN 4102. They are then classified under fire resistance ratings G 30, G 60, G 90 and G 120 depending on the time in minutes they are capable of withstanding the fire. Accordingly, a fire protection glass with rating G 30 must have an endurance of 30 minutes minimum when subjected to a standard fire behaviour test. The German fire resistance rating G corresponds to the fire resistance rating E according to European standard.

Fire protection glasses with fire resistance ratings G may have different structures. Thus, for instance, there are known fire protection glasses with this rating which consist of single toughened glass panes, of borosilicate glass panes or of wired glass panes. According to a different concept, fire protection glasses with fire resistance rating G comprise several glass panes of float glass of normal composition (soda-lime-silicate glass) combined by means of fire-retardant intermediate layers of aqueous alkali silicate. With the increase of temperature, these intermediate layers expand to form an opaque, solid and tough foam wherein the glass pane facing the fire will burst after some time and become fused with the foamed fire-retardant intermediate layer behind the pane as temperature rises. The resultant strong sandwich structure of glass and foam will maintain its enclosure function even after all panes of the fire protection glass have vents. Fire protection glasses of this kind have a significantly lower permeability to heat radiation than fire protection glasses of the structure mentioned above.

In case of glazings for buildings the glass panes used frequently must satisfy several requirements simultaneously. Thus, fire protection glasses in public facilities such as traffic and public areas like schools, kindergartens, sporting grounds or shopping malls also need to comply with more stringent safety requirements apart from fire protection. For such applications the glass must be splinterproof upon collision, as a rule. It is known to combine fire protection glasses with laminated glass panes for such applications. Herein, laminated glass panes shall be understood to be glass panes adhesively interconnected by laminating plastics layers in the form of foils or cast resins cured in situ to impart safety properties. In practice, mainly plastics foils made of polyvinyl butyral (PVB) or ethylene-vinyl acetate copolymers (EVA) are being used with a typical thickness of 0.4 mm or a multiple thereof.

From German Patent Specification DE 19 00 054 there is known a fire protection glass comprising at least two glass panes as well as at least one aqueous alkali silicate layer as a fire-retardant intermediate layer. Although this publication describes intermediate layer thicknesses of at least 0.3 mm to be suitable, the preferred thicknesses of these intermediate layers are in the range of 1 to 5 mm. In fact, an intermediate layer thickness of 1.2 to 1.7 mm or more has found general approval in practice for such fire protection glasses. Hitherto, experts have been of the opinion that a minimum thickness of clearly more than 1 mm would be indispensable for fire-retardant intermediate layers, in order to achieve a reliable fire protection.

Fire protection glasses with fire resistance ratings G 30 and G 60 with or without safety properties are generally known in different structures, in practice. Typically, glass panes of about 3 to 4 mm thickness or more as well as one or several fire-retardant intermediate layer(s) with a typical thickness of about 1.4 mm or more are being used. The comparatively large thickness is considered a disadvantage with most of these fire protection glasses. Other structures are only approved as fire protection glazings of comparatively small dimensions, since in case of larger size the appropriate fire resistance rating is no longer given or not reliably achieved. Frequently, the endurance specified for the fire resistance rating involved is just being reached so that the endurance may be more or less clearly shorter than the specified lifetime already in case of minor variations in quality. In such cases the production expenditures will be particularly high, in order to restrict variations in quality to the absolute minimum.

Fire protection glasses with their typical design or structure may be produced in different ways. A common method consists in that an aqueous alkali silicate layer is produced by pouring an initial mixture consisting of several components onto a glass pane in horizontal position and by subsequent drying thereof. The duration of this drying process will become extended superproportionally as a function of the thickness of the fire-retardant intermediate layer. Accordingly, it would be desirable to work with minimum intermediate layer thicknesses. In addition, it would be preferable to compose fire protection glasses of as few different components as possible.

The present invention is based on the technical problem of composing a typical fire protection glass that will at least satisfy the requirements set forth for fire resistance rating G 30. Herein, the fire protection glass should have a total thickness as small as possible and offer the possibility of being provided with safety properties in an easy and simple way, whenever necessary. The fire protection glass should be producible at favourable cost and reliably achieve the endurance specified for the fire resistance rating involved also in case of large-area glazing in excess of 1 x 2 m². Finally, the fire protection glass should be of a design or structure as simple as possible so as to permit production with a minimum number of different components.

The fire protection glass according to the invention is the subject of claim 1. Preferred embodiments are described in the subclaims.

According to the invention, the fire protection glass comprises at least two starting products each in the form of a glass pane (1) of 1.5 to 2.6 mm thickness as well as a fire-retardant intermediate layer of 0.5 to 1.0 mm thickness combined with at least one further glass pane (4, 5) of 1 to 2.6 mm thickness which is less than that of the glass panes (1) by means of at least one of the fire-retardant intermediate layers.

It was a surprise to note that with the pane structures according to the invention it is possible to provide fire protection glasses of fire resistance rating G 30 having a total thickness of just 10 mm or even less. Herein, the said further glass pane preferably will have a maximum thickness of 1.5 mm so that the total thickness of the fire protection glass with an intermediate layer thickness of 0.7 mm will just be approximately 8 mm. Furthermore, if the fire protection glass is additionally to offer safety properties, it will preferably comprise a laminated safety glass consisting of two further glass panes of 1 to 1.5 mm thickness and of a plastics laminating layer of 0.4 mm thickness particularly in the form of ethylene-vinyl acetate copolymers (EVA) so that the total thickness will just increase to about 10 mm.

A particular fire protection glass optimised with regard to total thickness and fire protection properties is **characterised in that** the fire-retardant intermediate layers have a thickness of 0.6 to 0.9 mm and preferably of about 0.7 mm. Thus, the thickness of the intermediate layers is just about 50 % that of conventional fire protection glasses. Surprisingly, tests have shown that the fire protection properties of a fire protection glass comprising two intermediate layers of 0.7 mm thickness instead of a single fire-retardant intermediate layer of 1.4 mm thickness as well as one further and preferably very thin glass pane with the same total volume of intermediate layer material are significantly better especially in case of large-size fire protection glasses.

The fire-retardant intermediate layers are preferably composed of an aqueous alkali silicate with an SiO₂ to Na₂O weight ratio of 2.7 to 3.5, preferably of 3.1 to 3.5 and most preferably about 3.3. They preferably have a glycerine content of 5 to 15 weight percent and preferably one of 8 to 14 weight percent. Their core moisture (water content in weight percent) should be less than 28 % and preferably of about 25 %. Such intermediate layers which are comparatively favourable in cost, permit a particularly good fire resistance to be ensured.

A particularly preferable structure of a fire protection glass of fire resistance rating G 30 /F 15 with safety properties is composed of two starting products of glass panes having a thickness of 1.5 to 2.6 mm and fire-retardant intermediate layers of 0.5 to 1 mm and preferably about 0.7 mm thickness which are joined to each other by means of one of the fire-retardant intermediate layers and by means of the other one are joined to a laminated glass consisting of two glass panes of 1.0 to 1.5 mm thickness and a plastics laminating layer of 0.4 to 0.8 mm thickness of ethylene-vinyl acetate copolymers (EVA). The designation F 15 (corresponding to EI 15 according to European standards EN 1363-1 and EN 1364-1) means that the temperature on the fire-remote glass side will exceed the ambient temperature by not more than 140 K on average after 15 minutes while not being higher than 180 K above ambient temperature anywhere.

When only low requirements to safety properties are specified, the above fire resistance ratings will be achieved in a particularly preferable way by a glazing structure comprising two starting products of glass panes of 1.5 to 2.6 mm thickness and fire-retardant intermediate layers of 0.5 to 1 mm and preferably about 0.7 mm thickness wherein said starting products by means of the fire-retardant intermediate layers will be joined to a further glass pane of merely 1.0 to 1.5 mm thickness arranged therebetween. Surprisingly with this glazing structure it is possible to provide fire protection glasses according to British Standards Safety Class C.

For classification under fire resistance rating G 60, the fire protection glass according to this invention will comprise, in particular, three starting products consisting of glass panes of 1.5 to 2.6 mm thickness and fire-retardant intermediate layers of 0.5 to 1 mm and preferably about 0.7 mm thickness wherein said starting products by means of two of the fire-retardant intermediate layers will be joined to each other and by means of the third layer to one further glass pane of 1.0 to 2.6 mm thickness.

According to the invention it will be particularly preferable under economical aspects to exclusively use starting products of an identical structure for production of the fire protection glass. Herein, such identical structure shall be understood to mean same glass thickness and same thickness of intermediate layers as well as same intermediate layer material. As compared with structures known from the prior art the starting products used for production of the fire protection glass according to this invention for identical fire resistance ratings consist of thinner glass panes and clearly thinner fire-retardant intermediate layers. These starting products merely require a relatively short drying process, in order to obtain the desired core moisture of less than 28%. Surprisingly, it is possible despite the small glass thickness and the small intermediate layer thickness to obtain starting products with a minimum of layer thickness variations and of high quality which permit fire protection glasses for G 30 and G 60 ratings to be produced with small total thickness and also in large dimensions. In addition, fire protection glasses according to the invention satisfy even more stringent standards for F 15 fire protection glasses, and for designs or structures with G 60 ratings the F endurance is clearly above 15 minutes.

It will be self-understood that fire protection glasses according to the invention need to be installed in suitable frame structures for classification under the desired fire resistance ratings. With large pane sizes, in particular, it may become necessary to provide for particularly high quality fire protection frames, in order to reliably ensure that the specified endurance will be attained. Suitable frame structures are generally known to those skilled in the art and need not be described in detail herein.

The present invention will now be described in detail with reference to the attached drawing wherein:
- Figure 1: is a cross-section through a first embodiment of the invention,
- Figure 2: is a cross-section through a second embodiment of the invention and
- Figure 3: is a cross-section through a third embodiment of the invention.

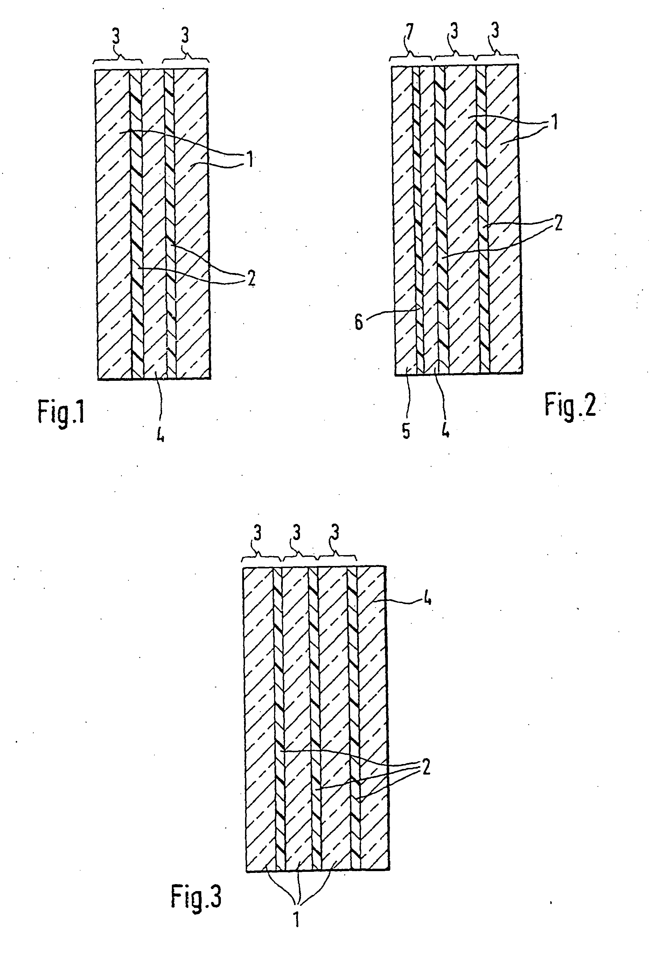

The fire protection glass shown in Figure 1 is a fire protection glass for a G 30 / F 15 fire resistance rating. The fire protection glass is composed of two starting products 3 of identical structure each consisting of a glass pane 1 and a fire-retardant intermediate layer 2 of aqueous alkali silicate. The glass panes 1 consist of commercial float glass (soda-lime-silicate glass) possibly with improved light transmission by reduction of the iron content.

The two glass panes 1 each have a thickness of 1.5 to 2.6 mm whilst the intermediate layers are about 0.7 mm thick each. A further glass pane with a thickness of just about 1 to 1.5 mm is arranged between the two starting products 3. The starting products 3 were produced in conventional manner by pouring an initial mixture mainly composed of water glass onto the glass panes 1 followed by drying to form the fire-retardant intermediate layer 2. Thereafter, said one further glass pane 4 was placed on the intermediate layer 2 of the first of the two starting products 3 whereupon the second starting product 3 was placed with its intermediate layer 2 onto the said further glass pane 4. For finishing of the fire protection glass the glass pane package was finally subjected to a pressure/heat treatment in an autoclave in the known manner whereby the intermediate layers 2 were joined to their adjacent glass panes 2 and 4.

Figure 2 shows a second embodiment of the invention. Same as in Figure 1, it relates to a fire protection glass for a G 30 / F 15 fire resistance rating additionally provided with safety properties, however. The fire protection glass is composed of two starting products 3 of identical structure as per the embodiment according to Figure 1 which, however, are combined directly with each other by means of one of the fire-retardant layers 2. Adjoining the other fire-retardant intermediate layer 2 is a laminated safety glass 7 consisting of two glass panes 4, 5 of 1 to 2.0 mm thickness combined with each other by means of a plastics laminating layer 6 of 0.4 mm thickness especially in the form of a foil of ethylene-vinyl acetate copolymers (EVA).

The film of ethylene-vinyl acetate copolymers (EVA) preferably used for the plastics laminating layer 6 improves the fire protection properties of the fire protection glass due to its higher melting point as compared with other films such as polyvinyl butyral (PVB) also suitable for this purpose. In addition, the use of ethylene-vinyl acetate copolymers (EVA) for the plastics laminating layer is of advantage in that the fire protection glass has a particularly good resistance to ultraviolet rays so that it may be employed in building areas subject to higher UV radiation, particularly for building facades, provided that the plastics laminating layer 6 is arranged between the radiation source (sun) and the possibly UV-sensitive fire-retardant intermediate layers 2. Due to its splinter proofing the plastics laminating layer 6 of ethylene-vinyl acetate copolymers (EVA) as used according to the invention will furthermore impart the fire protection glass those safety properties deemed significant and necessary in traffic and/or aboding areas.

The fire protection glass shown in Figure 3 is a fire protection glass for a G 60 fire resistance rating. It is composed of three identical starting products 3 of the structure described hereinbefore, joined to each other and to a further glass pane 4 having a thickness of 1.0 to 2.6 mm by means of their intermediate layers 2. Herein, the thickness of said further glass pane 4 is preferably less than that of the glass panes 1 of starting products 3 resulting in a particularly small total thickness of the fire protection glass without any major impairment of quality.

It has been found that the endurance of the fire protection glasses shown in Figures 1 to 3 is fully sufficient to reliably satisfy the requirements set forth for G 30 or G 60 fire resistance ratings even in case of dimensions of 1.2 x 2.6 m².

The invention will now be described more in detail with reference to specific embodiments shown as examples.

### Example I (referred to Figure 2)

An initial mixture of 2.5 kg/m² water glass with a 3.3 weight ratio of SiO₂ to Na₂O, a water content of about 60 weight percent and a glycerine content of 6.0 weight percent was applied to a glass pane of 2.6 mm thickness and thereafter dried in a drying oven to form a fire-retardant layer of about 0.7 mm thickness with a core moisture of about 25 weight percent and a glycerine content of about 11 weight percent

A starting product thus produced and having a size of about 2 x 3 m² was placed with its glass side onto the intermediate layer of a second starting product having the same dimensions. A laminated safety glass pane also of the same size and consisting of two individual panes of 1.5 mm thickness and an EVA laminating foil of 0.4 mm thickness was positioned on the exposed intermediate layer of the first starting product.

The complete glass pane package was subjected to a suitable laminating treatment in an autoclave and thereafter cut to obtain individual fire protection glasses.

Several of the fire protection glasses manufactured as described above with a size of 1.2 x 2.6 m² were installed in a conventional frame structure and subjected to a fire behaviour test according to DIN 4201. The enclosure function as specified for a G 30 rating fire protection glass was maintained for a period of up to 45 minutes, in any case, however, for more than 30 minutes. Herein, the glass surface temperature on the fire-remote side was about 350°C maximum. As regards the total heat radiation of the fire protection glasses a value of less than 5 kW/m² was determined at a distance of 1 m after 30 minutes. Hence, even the stringent requirements according to Dutch Standard NEN 6069 (total heat radiation at a distance of 1 m from the fire protection glazing must be lower than 15 kW/m²) were clearly passed by these large-area fire protection glasses. In addition, the fire protection glasses at an adequate safety margin satisfied the criteria for a rating as F 15 fire protection glass in accordance with DIN 4201. This means that the average pane temperature on the fire-remote side was not higher than 140 K above ambient temperature after 15 minutes.

### Example 2 (referred to Figure 1)

On the fire-retardant intermediate layer of a starting product manufactured as per Example 1 a 1 mm thick float glass pane was positioned which was then covered by a similar second starting product so that the intermediate layers of both starting products were each adjoining the float glass pane.

The complete glass pane package was subjected to a suitable laminating treatment in an autoclave and thereafter cut into individual fire protection glasses.

Within the scope of a fire behaviour test according to DIN 4102 with fire protection glasses of 1.2 x 2.3 m² size an enclosure function was reliably given for up to about 50 minutes so that the fire protection glasses could be classified under fire resistance rating G 30 with a high safety margin. This pane, too, showed a reliable F-endurance of 15 minutes.

### Example 3 (referred to Figure 1)

On the fire-retardant intermediate layer of a starting product manufactured as per Example 1 a 1.5 mm thick float glass pane was positioned which was then covered by a similar second starting product so that the intermediate layers of both starting products were each adjoining the float glass pane.

The complete glass pane package was subjected to a suitable laminating treatment in an autoclave and thereafter cut into individual fire protection glasses.

Within the scope of a fire behaviour test according to DIN 4102 with fire protection glasses of 1.2 x 2.3 m² size an enclosure function was reliably given for up to about 50 minutes so that the fire protection glasses could be classified under fire resistance rating G 30 with a high safety margin. This pane, too, showed a reliable F-endurance of 15 minutes.

### Example 4 (referred to Figure 3)

A glass pane package sequenced glass / intermediate layer / glass / intermediate layer /glass / intermediate layer / glass was composed of three starting products manufactured as described in Example 1 as well as of an additional float glass pane of 2.6 mm thickness. This glass pane package was subjected to a suitable laminating treatment in an autoclave and thereafter cut into individual fire protection glasses.

Within the scope of a fire behaviour test according to DIN 4102 with fire protection glasses having dimensions of 1.2 x 2.3 m² a reliable enclosure function was maintained for up to about 70 minutes so that the fire protection glasses could be allocated to fire resistance rating G 60. The F-endurance time was 24 minutes.

### Example 5

A fire protection glass produced as described in Example 1 was combined with a 6 mm thick float glass pane via a spacer of 8 mm width to form a fire protection insulating glass. This insulating glass was capable of maintaining an endurance for more than 30 minutes within the scope of a fire behaviour test according to DIN 4102 upon installation in a conventional frame construction. Corresponding good results could be obtained with fire protection insulating glasses for which single-pane safety glass panes or laminated safety glass panes had been used instead of the float glass pane.

### Example 6

A fire protection glass produced as described in Example 2 was combined with a laminated safety glass pane of 6 mm thickness via a spacer of 8 mm width to form a fire protection insulating glass. This insulating glass, too, was capable of maintaining an endurance for more than 30 minutes within the scope of a fire behaviour test according to DIN 4102 upon installation in a conventional frame construction.

The features of the present invention as disclosed in the above description, in the drawing as well as in the patent claims may be essential both individually and in any desired combination for the realisation of the purposes of the invention.

## Claims

1. A fire protection glass having a G30 fire resistance rating **characterised in that** it comprises at least two starting products (3) each comprising a glass pane of 1.5 to 2.6 mm thickness and a fire retardant intermediate layer (2) of aqueous alkali silicate of 0.5 to 1 mm thickness wherein said starting products are joined via at least one of the fire retardant intermediate layers to at least one further glass pane (4, 5) of 1.0 to 2.6 mm thickness which is less than that of the glass panes (1) forming part of the starting products (3).

2. A fire protection glass according to claim 1 **characterised in that** the starting products (3) are of an identical structure.

3. A fire protection glass according to either of claims 1 or 2, **characterised in that** the fire-retardant intermediate layers (2) have a thickness of 0.6 to 0.9 mm and preferably of about 0.7 mm.

4. A fire protection glass according to any of claims 1 to 3, **characterised in that** the further glass pane (4, 5) has a thickness of at most 1.5 mm.

5. A fire protection glass according to any of claims 1 to 3, **characterised in that** two further glass panes (4, 5) of 1.0 to 1.5 mm thickness are provided which are joined by a plastics laminating layer (6) preferably of ethylene-vinyl acetate copolymers (EVA) of 0.4 to 0.8 mm thickness to form a laminated safety glass (7).

6. A fire protection glass according to any of claims 1 to 5, having a fire resistance rating of G60 **characterised in that**, it comprises three starting products (3) of 1.5 to 2.6 mm thick glass panes (1) and fire-retardant intermediate layers (2) of 0.5 to 1.0 mm and preferably about 0.7 mm thickness wherein the said starting products are joined to each other via two of the fire-retardant intermediate layers (2) and to a further glass pane (4) of 1.0 to 1.6 mm thickness via the third intermediate layer.

7. A fire protection glass according to any of the preceding claims **characterised in that** the fire retardant intermediate layers (2) comprise an aqueous alkali silicate with a weight ratio of SiO₂ to Na₂O of 2.7 to 3.5, preferably of about 3.3.

8. A fire protection glass according to any of the preceding claims, **characterised in that** the fire retardant intermediate layers have a glycerine content of 5 to 15 weight percent and preferably of 8 to 14 weight percent.

9. A fire protection insulating glass which comprises a fire protection glass according to any of claims 1 to 8 combined with a further glass pane and separated therefrom by means of a spacer.

10. A fire protection insulating glass according to claim 9 **characterised in that** said further glass pane is a float glass pane, a safety glass pane or a laminated safety glass pane.

## Patentansprüche

1. Feuerschutzglas der Feuerwiderstandsklasse G30, **dadurch gekennzeichnet, dass** es mindestens zwei Ausgangsprodukte (3) umfasst, die jeweils eine Glasscheibe einer Dicke von 1,5 bis 2,6 mm und eine feuerhemmende Zwischenschicht (2) aus wässerigem Alkalisilicat einer Dicke von 0,5 bis 1 mm aufweisen, wobei die Ausgangsprodukte über mindestens eine der feuerhemmenden Zwischenschichten mit mindestens einer weiteren Glasscheibe (4, 5) einer Dicke von 1,0 bis 2,6 mm verbunden sind, die kleiner ist als die Dicke der Glasscheiben (1), die einen Teil der Ausgangsprodukte (3) bilden.

2. Feuerschutzglas nach Anspruch 1, **dadurch gekennzeichnet, dass** die Ausgangsprodukte (3) identischen Aufbau aufweisen.

3. Feuerschutzglas nach Anspruch 1 oder 2, **dadurch gekennzeichnet, dass** die feuerhemmenden Zwischenschichten (2) eine Dicke von 0,6 bis 0,9 mm und vorzugsweise eine Dicke von etwa 0,7 mm besitzen.

4. Feuerschutzglas nach einem der Ansprüche 1 bis 3, **dadurch gekennzeichnet, dass** die weitere Glasscheibe (4, 5) eine Dicke von höchstens 1,5 mm besitzt.

5. Feuerschutzglas nach einem der Ansprüche 1 bis 3, **dadurch gekennzeichnet, dass** zwei weitere Glasscheiben (4, 5) einer Dicke von 1,0 bis 1,5 mm vorgesehen sind, die durch eine Kunststoff-Laminatschicht (6), vorzugsweise aus EthylenVinylacetat(EVA)-Copolymeren, einer Dicke von 0,4 bis 0,8 mm verbunden sind, sodass ein laminiertes Sicherheitsglas (7) gebildet wird.

6. Feuerschutzglas nach einem der Ansprüche 1 bis 5, das der Feuerwiderstandsklasse G60 entspricht, **dadurch gekennzeichnet, dass** es drei Ausgangsprodukte (3) aus Glasscheiben (1) einer Dicke von 1,5 bis 2,6 mm und feuerhemmenden Zwischenschichten (2) einer Dicke von 0,5 bis 1,0 mm und vorzugsweise etwa 0,7 mm aufweist, wobei die Ausgangsprodukte über zwei der feuerhemmenden Zwischenschichten (2) miteinander sowie über die dritte Zwischenschicht mit einer weiteren Glasscheibe (4) einer Dicke von 1,0 bis 1,6 mm verbunden sind.

7. Feuerschutzglas nach einem der vorhergehenden Ansprüche, **dadurch gekennzeichnet, dass** die feuerhemmenden Zwischenschichten (2) ein wässeriges Alkalisilicat mit einem Gewichtsverhältnis von SiO₂ zu Na₂O von 2,7 bis 3,5 und vorzugsweise etwa 3,3 aufweisen.

8. Feuerschutzglas nach einem der vorhergehenden Ansprüche, **dadurch gekennzeichnet, dass** die feuerhemmenden Zwischenschichten einen Gehalt an Glycerin von 5 bis 15 Gew.-% und vorzugsweise 8 bis 14 Gew.-% aufweisen.

9. Feuerschutz-Isolierglas, das ein Feuerschutzglas nach einem der Ansprüche 1 bis 8 in Kombination mit einer weiteren Glasscheibe aufweist, die durch einen Abstandshalter davon getrennt ist.

10. Feuerschutz-Isolierglas nach Anspruch 9, **dadurch gekennzeichnet, dass** es sich bei der weiteren Glasscheibe um eine Float-Glasscheibe, eine Sicherheitsglasscheibe oder eine laminierte Sicherheitsglasscheibe handelt.

## Revendications

1. Verre de protection contre le feu ayant un indice de résistance au feu de G30, **caractérisé en ce qu'**il comprend au moins deux produits de départ (3) comprenant chacun une vitre d'une épaisseur de 1,5 à 2,6 mm et une couche intermédiaire ignifuge (2) de silicate alcalin aqueux ayant une épaisseur de 0,5 à 1 mm, dans lequel lesdits produits de départ sont joints par l'intermédiaire d'au moins l'une des couches intermédiaires ignifuges à au moins une autre vitre (4, 5) d'une épaisseur de 1,0 à 2,6 mm inférieure à celle des vitres (1) faisant partie des produits de départ (3).

2. Verre de protection contre le feu selon la revendication 1, **caractérisé en ce que** les produits de départ (3) ont une structure identique.

3. Verre de protection contre le feu selon l'une ou l'autre des revendications 1 et 2, **caractérisé en ce que** les couches intermédiaires ignifuges (2) ont une épaisseur de 0,6 à 0,9 mm et de préférence d'environ 0,7 mm.

4. Verre de protection contre le feu selon l'une quelconque des revendications 1 à 3, **caractérisé en ce que** la vitre supplémentaire (4, 5) a une épaisseur d'au plus 1,5 mm.

5. Verre de protection contre le feu selon l'une quelconque des revendications 1 à 3, **caractérisé en ce que** deux vitres supplémentaires (4, 5) d'une épaisseur de 1,0 à 1,5 mm sont utilisées et sont jointes par une couche feuilletée en matière plastique (6) de préférence constituée de copolymères d'éthylène-acétate de vinyle (EVA) d'une épaisseur de 0,4 à 0,8 mm pour former un verre de sécurité feuilleté (7).

6. Verre de protection contre le feu selon l'une quelconque des revendications 1 à 5, ayant un indice de résistance au feu de G60, **caractérisé en ce qu'**il comprend trois produits de départ (3) constitués de vitres (1) d'une épaisseur de 1,5 à 2,6 mm et de couches intermédiaires ignifuges (2) d'une épaisseur de 0,5 à 1,0 mm et, de préférence, d'environ 0,7 mm, dans lequel lesdits produits de départ sont joints les uns aux autres par l'intermédiaire de deux couches intermédiaires ignifuges (2) et à une vitre supplémentaire (4) d'une épaisseur de 1,0 à 1,6 mm par l'intermédiaire de la troisième couche intermédiaire.

7. Verre de protection contre le feu selon l'une quelconque des revendications précédentes, **caractérisé en ce que** les couches intermédiaires ignifuges (2) comprennent un silicate alcalin aqueux ayant un rapport pondéral du SiO₂ au Na₂O de 2,7 à 3,5 et de préférence d'environ 3,3.

8. Verre de protection contre le feu selon l'une quelconque des revendications précédentes, **caractérisé en ce que** les couches intermédiaires ignifuges ont une teneur en glycérine de 5 à 15 pour cent en poids et de préférence de 8 à 14 pour cent en poids.

9. Verre isolant de protection contre le feu qui comprend un verre de protection contre le feu selon l'une quelconque des revendications 1 à 8, combiné à une vitre supplémentaire et séparé de cette dernière au moyen d'un élément d'espacement.

10. Verre isolant de protection contre le feu selon la revendication 9, **caractérisé en ce que** ladite vitre supplémentaire est une vitre de verre flotté, une vitre de sécurité ou une vitre de sécurité feuilletée.
